(19) Europäisches Patentamt / European Patent Office / Office européen des brevets

(11) **EP 1 317 097 B1**

(12) **FASCICULE DE BREVET EUROPÉEN**

(45) Date de publication et mention
de la délivrance du brevet:
**28.11.2007   Bulletin 2007/48**

(51) Int Cl.:
***H04L 12/24*** *(2006.01)*

(21) Numéro de dépôt: **02292671.1**

(22) Date de dépôt: **28.10.2002**

(54) **Acquisition adaptative de données pour système de gestion de réseaux et de services**

Anpassbare Datenerfassung für Netzwerkverwaltungssystem und Diensten

Adaptive acquisition of data for a network management system and services

(84) Etats contractants désignés:
**AT BE BG CH CY CZ DE DK EE ES FI FR GB GR
IE IT LI LU MC NL PT SE SK TR**

(30) Priorité: **16.11.2001   FR 0114864**

(43) Date de publication de la demande:
**04.06.2003   Bulletin 2003/23**

(73) Titulaire: **Alcatel Lucent
75008 Paris (FR)**

(72) Inventeurs:
• **Betge-Brezetz, Stéphane
75015 Paris (FR)**
• **Martinot, Olivier
91210 Draveil (FR)**
• **Marilly, Emmanuel
92160 Antony (FR)**

(74) Mandataire: **Chaffraix, Sylvain et al
Alcatel Lucent
Intellectual Property & Standards
54 rue La Boétie
75008 Paris (FR)**

(56) Documents cités:
**US-A- 5 751 964**

• **COZZANI I ET AL: "A passive test and
measurement system: traffic sampling for QoS
evaluation" GLOBAL TELECOMMUNICATIONS
CONFERENCE, 1998. GLOBECOM 1998. THE
BRIDGE TO GLOBAL INTEGRATION. IEEE
SYDNEY,NSW,AUSTRALIA 8-12 NOV. 1998,
PISCATAWAY, NJ, USA,IEEE, US, 8 novembre
1998 (1998-11-08), pages 1236-1241,
XP010339722 ISBN: 0-7803-4984-9**

## Description

La présente invention est relative à la gestion de réseaux et de services de télécommunication. Plus précisément, elle concerne l'acquisition des données permettant cette gestion.

Afin de détecter des pannes ou des baisses de performances au sein d'un réseau de télécommunication, on lui associe habituellement un système de gestion de réseau.

Ce système de gestion de réseau dispose de moyens pour acquérir des données provenant des équipements de réseau (routeurs, commutateurs, répéteurs, connexions etc.)

Ces données peuvent être des alarmes ou bien des mesures.

Les alarmes sont notifiées par un équipement de réseau ayant détecté un problème (déficience, dépassement d'un seuil par une valeur etc.)

Les mesures sont des valeurs transmises par les équipements de réseau en dehors d'une telle situation de problème. Elles peuvent correspondre à un modèle « push », c'est-à-dire transmises à la demande du système de gestion de réseau. Ces transmissions peuvent être périodiques

Elles peuvent aussi correspondre à un modèle « pull ». Dans ce cas, les mesures sont disponibles dans des bases de données localisées sur les équipements de réseau. Ces bases de données sont habituellement désignées sous l'acronyme MIB, pour *Management Information Base.* Le système de gestion peut alors lire ces mesures en accédant à ces bases de données MIB.

Sur la base de ces données, le système de gestion de réseau a alors pour charge de détecter les éventuels problèmes et de les caractériser.

Le système de gestion de réseau peut aussi avoir pour rôle de déterminer l'impact de ces problèmes sur les services véhiculés par le réseau et sur leurs performances.

Afin de tenir correctement ce rôle, il importe pour le système de gestion de réseau d'avoir à disposition des données répondant à des contraintes de rapidité et de précision.

Ces données sont acquises par des capteurs positionnés sur tous ou sur une partie des équipements de réseau, puis transmises au système de gestion de réseau.

Toutefois, dans la mesure où le nombre d'équipements de réseau à surveiller peut être important, un compromis doit être recherché.

Il est en effet pénalisant d'acquérir toutes les données possibles sur le réseau, car cela surchargerait :

- le système de gestion de réseau, qui doit traiter l'ensemble de ces données,
- le réseau supervisé lui-même (les données étant souvent remontées par les moyens de communication du réseau lui-même), et

- les équipements de réseau supervisés qui doivent effectuer le traitement pour la transmission des mesures et des alarmes.

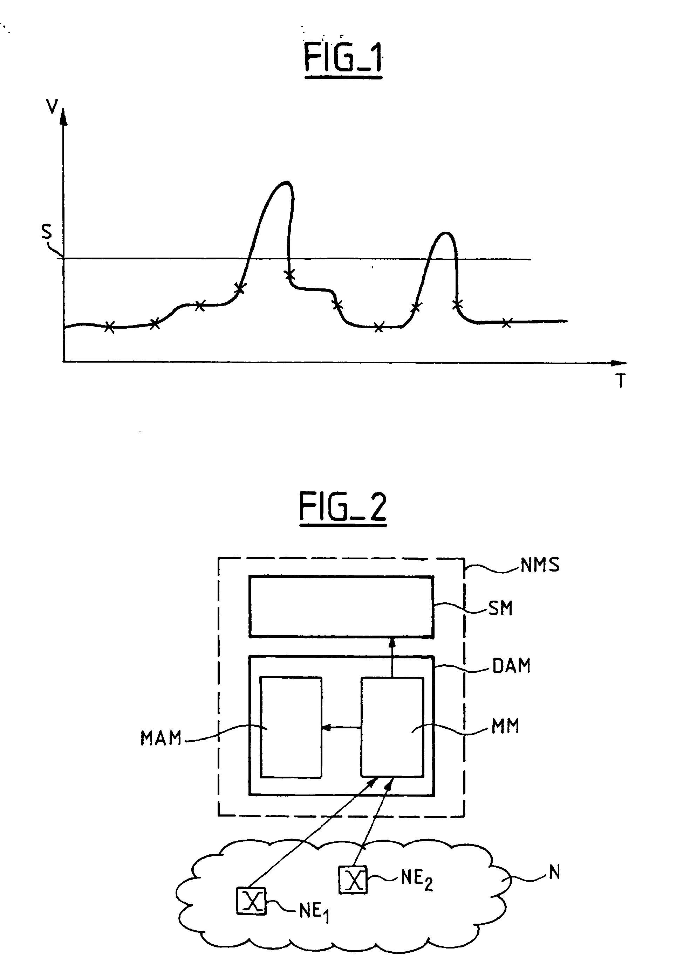

D'un autre coté, moins le système de gestion de réseau dispose de données, moins il est à même de remplir son rôle correctement. Notamment, si une donnée disponible sur un équipement de réseau n'est pas suffisamment mesurée, le système de gestion de réseau peut ne pas détecter le dépassement d'un seuil. Un tel exemple de sous-échantillonnage est illustré par la figure 1.

Sur cette figure 1, on a représenté la courbe d'évolution d'une valeur V mesurée sur un équipement de réseau (par exemple, le taux de perte de paquets), en fonction du temps T. Le système de gestion de réseau a associé un seuil S cette valeur et on considère qu'une alarme doit être déclenchée lors du dépassement de ce seuil. Les croix représentent les points de mesure.

On voit bien que les dépassements de la courbe ne sont pas détectés puisque toutes les valeurs mesurées (les croix) se situent en dessous de la ligne du seuil S.

Selon l'état de l'art, un compromis est donc recherché lors de la phase de configuration du système de gestion de réseau. La personne en charge de la configuration doit alors déterminer où placer les capteurs, et le cas échéant, la périodicité appropriée d'acquisition des données.

Une telle solution est toutefois insuffisante puisque reposant sur la supposition que le réseau n'évolue pas dans le temps. Or, le Demandeur considère que l'évolution d'un réseau induit un manque de performance des systèmes de gestion de réseau de l'état de la technique.

Cette évolution peut résulter d'une évolution du trafic ou bien d'une modification du réseau lui-même (ajout d'un équipement de réseau, reconfiguration dynamique des schémas de routage etc.)

Une solution pour résoudre ce problème consiste à placer entre les capteurs et le système de gestion de réseau proprement dit, une couche intermédiaire. Les capteurs sont configurés pour acquérir le maximum de données possible et de les transmettre à cette couche intermédiaire. Le rôle de la couche intermédiaire est de filtrer et de corréler ces données afin de n'en transmettre qu'une partie exploitable au système de gestion de réseau.

Le système de gestion de réseau peut dynamiquement modifier la couche intermédiaire pour, en fonction de l'évolution du réseau, modifier les critères de filtrage et de corrélation.

On peut citer, comme tel état de l'art, le produit « Temip » de la société Compaq, ou bien tout logiciel de gestion de réseau basé sur un produit de gestion de règles tel « Ilog Rules » de la société Ilog.

Cette solution n'est toutefois pas véritablement satisfaisante.

Tout d'abord, elle oblige à l'ajout d'un traitement supplémentaire mis en oeuvre dans la couche intermédiaire. Cette couche intermédiaire acquérant le maximum possible de données, ce traitement supplémentaire nécessite énormément de ressources de traitement.

Il est aussi à noter qu'une bonne partie de ce traitement peut être totalement inutile, puisque concernant des données auxquels le système de gestion de réseau ne s'intéresse pas, à un instant donné. Le problème de la surcharge du réseau, induite par les mesures, demeure.

Ensuite, cette façon de faire ne permet pas de prendre en compte des modifications dans la configuration du réseau : si un équipement de réseau est ajouté, il ne peut pas être pris en compte par le système de gestion de réseau, sauf à effectuer une nouvelle configuration manuelle du système de gestion de réseau.

Une autre solution de l'état de l'art est décrite dans l'article « *A passive test and measurement system: traffic sampling for QoS evaluation* » de Irene Cozzani et Stefano Giordano, de l'université de Pise. Les auteurs proposent de faire varier le taux d'échantillonnage afin d'améliorer la pertinence des données collectées.

Toutefois, une telle solution ne résout pas l'ensemble des problèmes précédemment soulevés. Notamment, elle ne résout pas ceux éventuellement provoqués par l'ajout d'un nouvel élément de réseau, ou bien l'apparition d'un engorgement (ou plus généralement, d'un problème) en un nouvel endroit.

Le but de l'invention est de résoudre ces différents problèmes en proposant un système de gestion de réseau pouvant adapter son système de mesure en fonction des données mesurées.

Pour ce faire, l'invention a pour premier objet, un système de gestion de réseau, comprenant un module d'acquisition de données comportant lui-même un module de mesures pour collecter des données provenant de sondes placées sur des équipements de réseau, en fonction de paramètres de mesures, et les transmettre à un module de supervision. Ce système de gestion de réseau se caractérise en ce que le module d'acquisition de données comporte de surcroît, un module d'adaptation de mesures disposant de moyens pour ajouter ou supprimer des sondes et pour modifier les paramètres de mesure associés à ces sondes, en fonction des données collectées.

L'invention a pour second objet un système de gestion de service, comportant un tel système de gestion de réseau.

L'invention et ses avantages apparaîtront de façon plus claire dans la description d'une mise en oeuvre qui va suivre, en liaison avec les figures annexées.

La figure 1, déjà commentée, illustre le problème du sous-échantillonnage présenté par certaines solutions de l'état de la technique.

La figure 2 schématise un système de gestion de réseau selon l'invention.

La figure 3 représente une vue de détail du module d'acquisition de données de l'invention.

La figure 4 illustre un exemple de règle utilisable par le module d'adaptation des paramètres.

La figure 5 représente une partie d'un réseau de données composée de 5 routeurs.

La figure 2 représente une mise en oeuvre d'un système de gestion de réseau conforme à l'invention.

Selon ce mode de réalisation, le système de gestion de réseau NMS comporte au moins un module de supervision SM et un module d'acquisition de données DAM.

Le module d'acquisition de données DAM reçoit des données provenant de sondes (non représentées) situées sur des équipements de réseau $NE_1$, $NE_2$ d'un réseau N. Ces sondes transmettent des données en fonction de paramètres de mesure comme, par exemple, une période ou une fréquence de mesure, un algorithme de moyennage des données de mesure, la fenêtre sur laquelle ce moyennage doit être effectué, etc.

Ces données sont d'abord reçues par un module de mesure MM qui les transmet d'une part au module de supervision SM et d'autre part à un module d'adaptation de mesures MAM.

Le module de supervision SM peut être conforme aux systèmes de supervision de l'état de la technique et réaliser les tâches classiques pour de tels systèmes : corrélation d'alarmes, affichage sur une interface homme-machine (IHM, ou MMI selon la terminologie en langue anglaise « *Man-Machine Interface* »), etc.

Le module d'adaptation de mesures MAM dispose de moyens pour, en fonction de ces données :

- modifier les paramètres de mesure des sondes placées sur les équipements de réseau,
- ajouter ou supprimer des sondes.

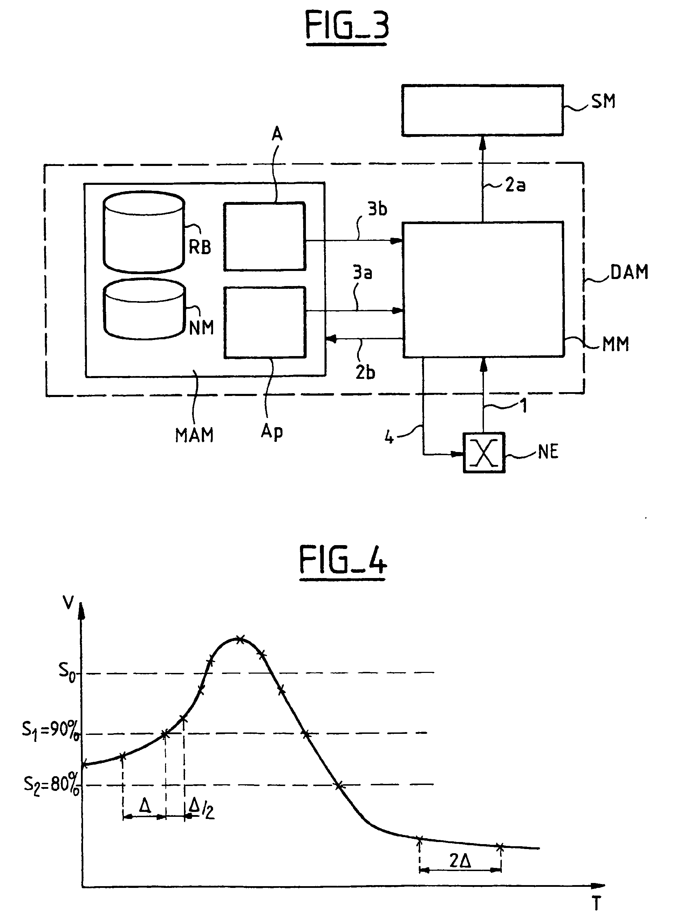

La figure 3 représente une vue de détail du module d'acquisition de données selon un mode de réalisation de l'invention.

Dans un premier temps, le module de mesure MM collecte des données provenant de sondes placées sur les équipements de réseau NE. Ces données sont transmises sous forme d'un message 1 qui peut être transmis périodiquement ou sur sollicitation du module de mesure MM.

Comme évoqué précédemment, ce module de mesure transmet ensuite ces données collectées d'une part au module de supervision SM, dans un message 2a, et d'autre part au module d'adaptation de mesures MAM, dans un message 2b.

Le module d'adaptation de mesures MAM est plus particulièrement détaillé. Selon ce mode de réalisation, il se compose de quatre modules coopérants :

- Un module d'adaptation des paramètres $A_p$,
- Un module d'adaptation des sondes $A_s$ ,

- Un modèle du réseau NM
- Une base de règles RB.

Le module d'adaptation des paramètres $A_p$ a pour rôle de modifier les paramètres des sondes, en fonction des données collectées, véhiculées par le message 2b reçu du module de mesure MM. Il peut alors transmettre des paramètres modifiés, dans un message 3a, au module de mesure MM. Ce dernier les transmet alors aux équipements de réseau NE concernés, dans un message 4.

Le module d'adaptation des sondes $A_s$ a, quant à lui, pour rôle d'ajouter ou supprimer des sondes, en fonction de ces mêmes données collectées. Il peut alors transmettre des informations relatives à ces ajouts ou suppressions, dans un message 3b transmis au module de mesure MM. Comme précédemment, ce dernier peut les transmettre aux équipements de réseau NE, dans un message 4.

La figure 4 illustre un exemple de règle utilisable par le module d'adaptation des paramètres $A_p$.

Cette figure 4 représente l'évolution de la valeur V d'une des données collectées, en fonction du temps T.

Le seuil $s_o$ représente la limite maximale que peut atteindre cette valeur V avant qu'une alarme doive être déclenchée.

On définit aussi une période de mesure qui définit l'espacement temporel entre chaque mesure, représentée par une croix sur la courbe. Cette période de mesure a initialement une valeur $\Delta$.

Lorsque la courbe dépasse un seuil $s_1$, la période de mesure est diminuée d'un certain facteur de diminution. Ce seuil peut par exemple valoir 90% du seuil $s_0$ et la diminution peut être faite d'un facteur 2. La nouvelle valeur de la période de mesure est alors $\dfrac{\Delta}{2}$.

Cette diminution de la période de mesure $\Delta$ permet d'augmenter la précision de la connaissance que possède le module de supervision SM de l'évolution de la valeur V. Il pourra ainsi ne pas laisser passer un dépassement de la valeur de seuil $s_0$ comme dans la solution de l'état de la technique expliquée précédemment par la figure 1.

Inversement, lorsque la valeur V repasse au-dessous de ce seuil $s_1$, la période de mesure peut reprendre sa valeur initiale $\Delta$.

Un deuxième seuil $S_2$ peut aussi être défini afin d'améliorer encore les performances du système selon l'invention. Ce seuil $s_2$ peut par exemple être défini comme étant 80% du seuil $s_0$.

Lorsque la valeur V passe en dessous de ce seuil $s_2$, la période de mesure peut être augmentée d'un facteur d'augmentation, jusqu'à une valeur par exemple égale à $2 \times \Delta$.

Ceci permet de minimiser la charge du réseau et du module de mesure MM. Cette minimisation est tout à fait acceptable dans la mesure où étant assez loin du seuil $s_0$, la probabilité d'un dépassement est négligeable.

Une amélioration possible de cet algorithme est de faire dépendre le facteur d'augmentation et de diminution, d'un facteur de disparité.

Ce facteur de disparité $\delta$ peut être calculé comme étant la moyenne, par exemple géométrique, des écarts entre deux mesures consécutives.

Ainsi, si ce facteur de disparité est faible, on peut diminuer le facteur d'augmentation ou de diminution. Inversement, si le facteur de disparité est élevé, on peut augmenter le facteur d'augmentation ou de diminution.

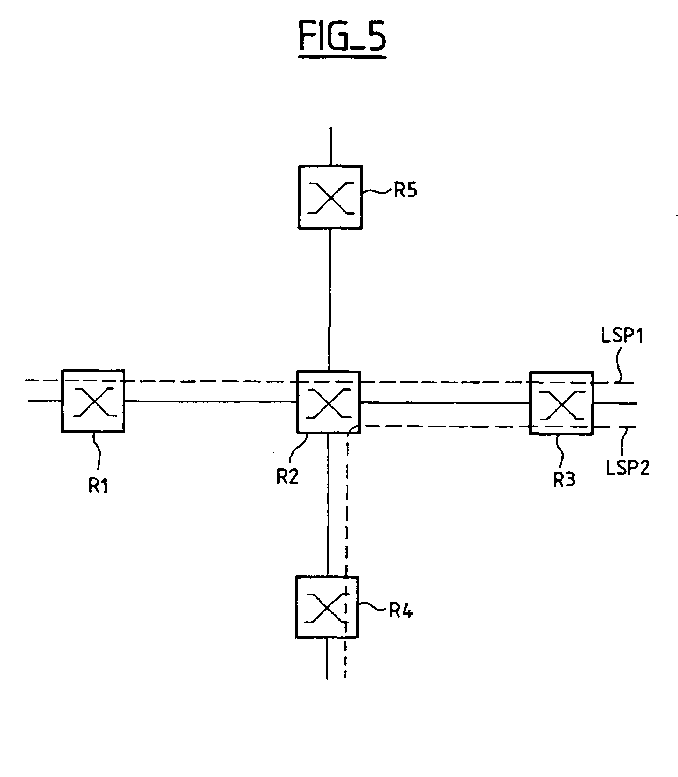

La figure 5 représente une partie d'un réseau de données composée de 5 routeurs R1, R2, R3, R4 et R5.

Deux connexions virtuelles, LSP1 et LSP2, ont été établies :

- La première LSP1 passe par les routeurs R1, R2 et R3,
- La seconde LSP2 passe par les routeurs R4, R2 et R5.

Une règle simple qui peut être mise en oeuvre consiste à déterminer si la charge de chaque connexion virtuelle est supérieure ou non à seuil prédéterminé.

Si cette charge d'une connexion virtuelle est supérieure à ce seuil alors on place des sondes sur chacun des routeurs participant à cette connexion virtuelle (si elles n'ont pas déjà été placées).

Inversement, si la charge repasse en dessous de ce seuil (ou d'un autre seuil), on supprime les sondes sur les routeurs participant à cette connexion virtuelle.

Selon une mise en oeuvre de l'invention, les règles gouvernant le comportant des modules d'adaptation des paramètres $A_p$ et d'adaptation des sondes $A_s$ sont stockées dans une base de règles RB, contenue dans le module d'adaptation de mesures MAM.

De surcroît, le module d'adaptation de mesures MAM peut contenir un modèle du réseau NM afin de permettre l'inférence de ces règles.

## Revendications

1. Système de gestion de réseau (NMS), comprenant un module d'acquisition de données (DAM) comportant un module de mesures (MM) pour collecter des données provenant de sondes placées sur des équipements de réseau ($NE_1$, $NE_2$) d'un réseau (N), en fonction de paramètres de mesures associés auxdites sondes, et les transmettre à un module de supervision (SM), **caractérisé en ce que** ledit module d'acquisition de données comporte de surcroît, un module d'adaptation de mesures (MAM) disposant de moyens pour ajouter ou supprimer desdites sondes et pour modifier les paramètres de mesure associés en fonction des données collectées.

2. Système de gestion de réseau selon la revendication précédente, dans lequel lesdits paramètres de mesure sont 19 période de mesure.

3. Système de gestion de réseau selon la revendication 2, dans lequel ledit module d'adaptation de mesure est apte à diminuer ladite période de mesuré d'un facteur de diminution lorsque une donnée collectée dépasse un premier seuil déterminé, et apte rétablir la période de mesure initiale lorsqu'une donnée collecté repasse en deçà dudit premier seuil.

4. Système de gestion de réseau selon l'une des revendications 2 ou 3, dans lequel ledit module d'adaptation de mesure est apte à augmenter ladite période de mesure d'un facteur d'augmentation lorsque une donnée collectée passe en-dessous d'un second seuil déterminé.

5. Système de gestion de réseau selon l'une des revendications 2 à 4, dans lequel ledit facteur d'augmentation et/ou ledit facteur de diminution dépendent d'un facteur de disparité, calculé comme étant la moyenne des écarts entre deux données collectées consécutives.

6. Système de gestion de réseau selon l'une des revendications précédentes, dans lequel ledit module d'adaptation de mesure contient un modèle du réseau de communication.

7. Système de gestion de service, comportant un système de gestion de réseau selon l'une des revendications précédents.

**Claims**

1. A network management system (NMS) comprising a data acquisition module (DAM) itself comprising a measurement module (MM) for collecting data coming from probes placed on pieces of network equipment (NE$_1$, NE$_2$) in a network (N), and for forwarding the data to a supervisor module (SM), the data being collected as a function of measurement parameters associated with said probes, the system being **characterized in that** said data acquisition module further comprises a measurement adaptation module (MAM) having means for adding or removing said probes and for modifying the associated measurement parameters as a function of the collected data.

2. A network management system according to the preceding claim in which said measurement parameters are the measurement period.

3. A network management system according to claim 2 in which said measurement adaptation module is suitable for shortening said measurement period by a shortening factor when collected data exceeds a first determined threshold, and is suitable for reestablishing the initial measurement period when collected data drops back below said first threshold.

4. A network management system according to claim 2 or claim 3 in which said measurement adaptation module is suitable for lengthening said measurement period by a lengthening factor when collected data drops below a second determined threshold.

5. A network management system according to any one of claims 2 to 4 in which said lengthening factor and/or said shortening factor depend on a disparity factor, calculated as the mean of the differences between two consecutive data collections.

6. A network management system according to any preceding claim in which said measurement adaptation module contains a model of the communications network.

7. A service management system comprising a network management system according to either preceding claim.

**Patentansprüche**

1. Netzwerkverwaltungssystem (NMS), beinhaltend ein Modul zur Datenerfassung (DAM), welches ein Messmodul (MM) enthält, um Daten zu sammeln, die von Messfühlern herkommen, welche an Netzwerkausrüstungen (NE$_1$, NE$_2$) eines Netzwerks (N) angebracht sind, in Abhängigkeit von mit diesen Messfühlern verknüpfen Messparametern, und sie an ein Überwachungsmodul (SM) zu übertragen, **dadurch gekennzeichnet, dass** dieses Modul zur Datenerfassung außerdem ein Modul zur Anpassung von Messungen (MAM) enthält, das über Mittel verfügt, um diese Messfühler hinzuzufügen oder zu entfernen und um die damit verknüpften Messparameter in Abhängigkeit von den gesammelten Daten abzuändern.

2. Netzwerkvervenvaltungssystem gemäß dem vorstehenden Anspruch, bei dem diese Messparameter die Messperiode sind.

3. Netzwerkverwallungssystem gemäß Anspruch 2, bei dem dieses Modul zur Anpassung von diese Messperiode um einen Verkürzungsfaktor verkürzen kann, wenn eine erfasste Datenangabe eine erste festgelegte Schwelte überschreitet und diese anfängliche Messperiode wieder herstellen kann, wenn eine erfasste Datenangabe wieder urterhalb dieser ersten Schweile liegt

4. Netzwerkverwallüngssystem gemäß einem der Ansprüche 2 oder 3, bei dem dieses Modul zur Anpassung von Messungen diese Messperiode um einen Verlängerungsfaktor verlängern kann, wenn eine erfasste Datenangabe unter eine zweite festgelegte Schwelle fällt.

5. Netzwerkverwaltungssystem gemäß einem der Anspruche 2 bis 4, bei dem dieser Verlängerungs- und/oder dieser Verkürzungsfaktor von einem Disparitätsfaktor abhängen, der berechnet wird als der Mittelwert der Unterschiede zwischen zwei aufeinander folgenden erfassten Daten.

6. Netzwerkverwartungssystem gemäß einem, der vorstehenden. Ansprüche, bei dem dieses Modul zur Messungsanpassung ein Modell des enthält.

7. Dienstverwaltungssystem, das ein Netzwerkverwaltungssystem gemäß einem der vorstehenden Ansprüche einschließt.

## FIG_1

## FIG_2

# FIG_3

# FIG_4

# FIG_5